# EUROPEAN PATENT APPLICATION

(11) **EP 3 232 309 A1**
(43) Date of publication of application: **18.10.2017**
(21) Application number: 16191887.5
(22) Date of filing: 30.09.2016
(51) Int. Cl.: G06F 3/0482, G06F 3/0481

(54) **METHOD AND DEVICE FOR LAUNCHING FUNCTIONS OF AN APPLICATION**

(30) Priority: 13.04.2016 CN 201610227323
(71) Applicant: Beijing Xiaomi Mobile Software Co., Ltd., Beijing 100085 (CN)
(72) Inventor: WANG, Shuo, Beijing, Beijing 100085 (CN); JIANG, Dongya, Beijing, Beijing 100085 (CN); WANG, Guangjian, Beijing, Beijing 100085 (CN)
(74) Representative: dompatent von Kreisler Selting Werner - Partnerschaft von Patent- und Rechtsanwälten mbB

(57) **Abstract**

The present disclosure provides a method and a device for launching a function of an application, and generally relates to the technical field of a terminal. The method comprises: displaying (101) a suspension identification corresponding to an application, when it is detected the application is running in the foreground; obtaining (102), when any operation on the suspension identification is detected, operation information of the operation; and launching (103) a target function according to the operation information of the operation, wherein the target function is a function that matches the operation information. By performing different operations on a suspension identification corresponding to an application, the present disclosure may launch a function that matches a corresponding operation, so that the way to launch a function of an application can be more convenient, and thus improving the launching efficiency.

## Description

### FIELD

The present disclosure generally relates to the technical field of a terminal, and more particularly to a method and a device for launching a function of an application.

### BACKGROUND

With the development of technology, smart terminals have become an integral part of people's life. Typically, people can use different kinds of applications installed on smart terminals for study, entertainments, work, etc.

In related technologies, different applications vary for their functions. When an application is running in the foreground, a user may perform different operations by selecting corresponding function buttons. In general, due to an application containing numerous functions, some of function buttons may be distributed on different display interfaces, or hidden in foldable function lists, such as the scan function button for WeChat. With respect to these function buttons, the user needs to first find a display interface, or execute an expanding operation on a function list locating thereon, and then executes selection operation on these function buttons. The smart terminal may respond to the selection operation to launch a corresponding function.

### SUMMARY

In order to overcome problems in the related technologies, the present disclosure provides a method and a device for launching a function of an application. The technical solutions are as follows.

According to a first aspect of the embodiments of the present disclosure, a method for launching a function of an application is provided, comprising: displaying a suspension identification corresponding to the application, when it is detected that the application is running in a foreground; obtaining, when any operation on the suspension identification is detected, operation information of the operation; launching a target function according to the operation information of the operation, wherein the target function is a function that matches the operation information.

Alternatively, before obtaining operation information of the operation, when any operation on the suspension identification is detected, the method further comprises: obtaining a binding list of the application from stored binding lists of a plurality of applications, wherein the binding list of the application is used for indicating a binding relationship between operation information and a function of the application.

Alternatively, before the displaying the suspension identification corresponding to the application, the method further comprises: creating a binding list of the application based on at least one of functions to be bound of the application and operation information corresponding to each of the functions to be bound, when a binding operation for the suspension identification of the application is detected.

Alternatively, the operation comprises single-click operation, double-click operation, swipe operation, and long-press operation.

Alternatively, the launching of the target function according to the operation information of the operation comprises: displaying, if the operation information is specified operation information, a plurality of sub-identifications in a preset range of the suspension identification, wherein each of the sub-identifications is bound with a respective function of the application.

Alternatively, after launching the target function according to the operation information of the operation, the method further comprises: launching, when a selection operation on any of the plurality of sub-identifications is detected, a function bound with the sub-identification corresponding to the selection operation.

Alternatively, the plurality of sub-identifications are displayed on an arc with the suspension identification as a center and a preset distance as a radius.

Alternatively, after the plurality of sub-identifications are displayed, the method further comprises: stopping displaying the plurality of sub-identifications when an operation having the specified operation information on the suspension identification is detected again.

According to a second aspect of the embodiments of the present disclosure, a device for launching a function of an application is provided, comprising: a display module to display a suspension identification corresponding to the application, when it is detected that the application is running in the foreground; a first obtainment module to obtain, when any operation on the suspension identification is detected, operation information of the operation; and a launching module to launch a target function according to the operation information of the operation, wherein the target function is a function that matches the operation information.

Alternatively, the device further comprises a second obtainment module to obtain a binding list of the application from stored binding lists of a plurality of applications, wherein the binding list of the application is used for indicating a binding relationship between operation information and a function of the application.

Alternatively, the device further comprises a creation module to create a binding list of the application based on at least one of functions to be bound of the application and operation information corresponding to each of the functions to be bound, when a binding operation for the suspension identification of the application is detected.

Alternatively, the operation comprises single-click, double-click, swipe, and long-press operation.

Alternatively, the launching module is further used to display, if the operation information is specified operation information, a plurality of sub-identifications in a preset range of the suspension identification, and wherein each of the sub-identifications is bound with a respective function of the application.

Alternatively, the launching module is further used to launch, when a selection operation on any of the plurality of sub-identifications is detected, a function bound with the sub-identification corresponding to the selection operation.

Alternatively, the plurality of sub-identifications are displayed on an arc with the suspension identification as a center and a preset distance as a radius.

Alternatively, the launching module is further used to stop displaying the plurality of sub-identifications when an operation having the specified operation information on the suspension identification is detected again.

According to a third aspect of the embodiments of the present disclosure, a device for launching a function of an application is provided, comprising: a processor; a memory for storing processor-executable instructions; wherein the processor is configured to: display a suspension identification corresponding to the application, when it is detected that the application is running in the foreground; obtain, when any operation on the suspension identification is detected, operation information of the operation; and launch a target function according to the operation information of the operation, wherein the target function is a function that matches the operation information.

The technical solutions provided in the embodiments of the disclosure may include the following beneficial effects. By performing different operations on a suspension identification corresponding to an application, the present disclosure may launch a function that matches a corresponding operation, so that the way to launch a function of an application can be more convenient, and thus improving the launching efficiency.

It is to be understood that the forgoing general description and the following detailed description are illustrative only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow diagram illustrating a method for launching a function of an application according to an exemplary embodiment.
Fig. 2A is a flow diagram illustrating a method for launching a function of an application according to an exemplary embodiment.
Fig. 2B is a display schematic diagram illustrating a suspension identification according to an exemplary embodiment.
Fig. 3 is a flow diagram illustrating a method for launching a function of an application according to an exemplary embodiment.
Fig. 4 is a display schematic diagram illustrating a suspension identification according to an exemplary embodiment.
Fig. 5 is a block diagram illustrating a device for launching a function of an application according to an exemplary embodiment.
Fig. 6 is a block diagram illustrating a device for launching a function of an application according to an exemplary embodiment.
Fig. 7 is a block diagram illustrating a device for launching a function of an application according to an exemplary embodiment.
Fig. 8 is a block diagram illustrating a device for launching a function of an application according to an exemplary embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

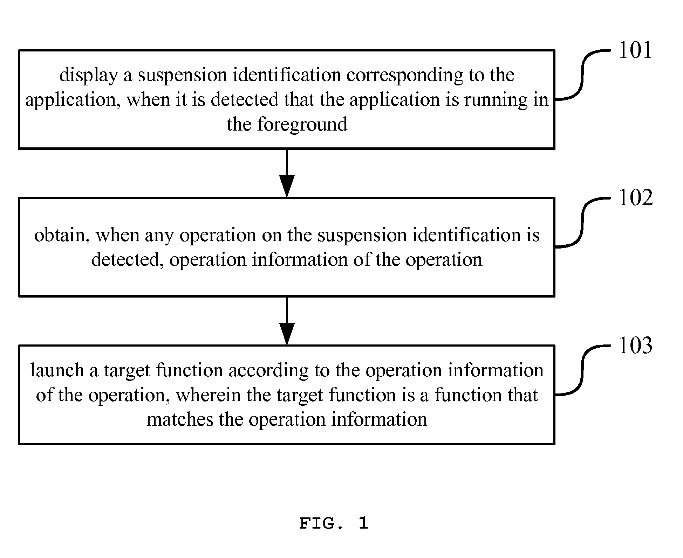

Fig. 1 is a flow diagram illustrating a method for launching a function of an application according to an exemplary embodiment. As shown in Fig. 1, the method is used with a mobile terminal, including the following steps.

In step 101, when it is detected that an application is running in the foreground, a suspension identification corresponding to the application is displayed.

In step 102, when any operation on the suspension identification is detected, operation information of the operation is obtained.

In step 103, a target function, which is a function that matches the operation information, is launched according to the operation information of the operation.

By performing different operations on a suspension identification corresponding to an application, the present disclosure may launch a function that matches a corresponding operation, so that the way to launch a function of an application can be more convenient, and thus improving the launching efficiency.

Alternatively, before obtaining operation information of the operation, when any operation on the suspension identification is detected, the method may further include: obtaining a binding list of the application from stored binding lists of a plurality of applications, wherein the binding list of the application is used for indicating a binding relationship between operation information and a function of the application.

Alternatively, before the suspension identification corresponding to the application is displayed, the method may further include: creating a binding list of the application based on at least one of functions to be bound of the application and operation information corresponding to each of the functions to be bound, when a binding operation for the suspension identification of the application is detected.

Alternatively, the operation may include single-click operation, double-click operation, swipe operation and long-press operation.

Alternatively, launching the target function according to the operation information of the operation may include: displaying, if the operation information is specified operation information, a plurality of sub-identifications within a preset range of the suspension identification.

Alternatively, after launching the target function according to the operation information of the operation, the method may further include: launching, when a selection operation on any of the plurality of sub-identifications is detected, a function bound with the sub-identification corresponding to the selection operation.

Alternatively, the plurality of sub-identifications are displayed on an arc with the suspension identification as a center and a preset distance as a radius.

Alternatively, after the plurality of sub-identifications are displayed, the method may further include: stopping displaying the plurality of sub-identifications when an operation having the specified operation information on the suspension identification is detected again.

All of the alternative technical solutions described above may form alternative embodiments of the present disclosure in any combination, and will not be described in detail herein.

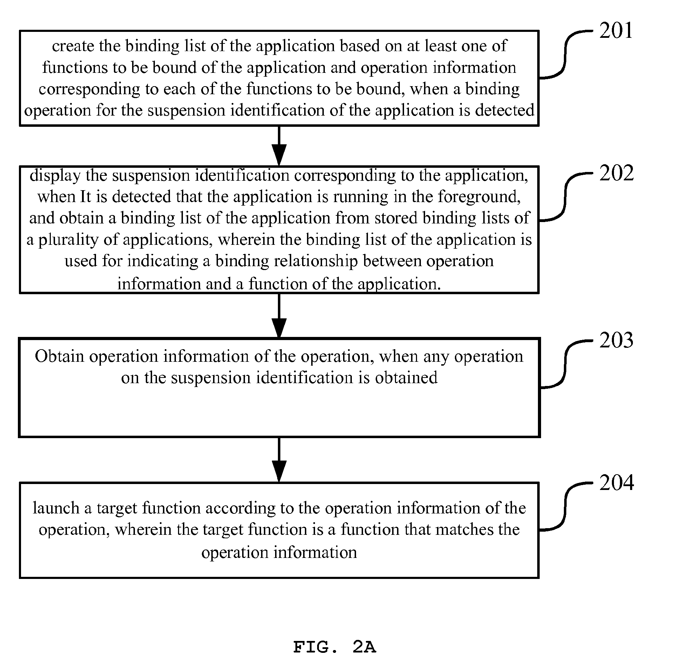

Fig. 2A is a flow diagram illustrating a method for launching a function of an application according to an exemplary embodiment. As shown in Fig. 2A, the method is used with a terminal, and may include the following steps.

In step 201, a binding list of the application is created based on at least one of functions to be bound of the application and operation information corresponding to each of the functions to be bound, when a binding operation for the suspension identification of the application is detected,.

In the embodiments of the present disclosure, the suspension identification with mobility is displayed on a display interface of the terminal, that is, when a movement operation on the suspension identification is detected, the suspension identification is controlled to move along with a position indicated by the movement operation until it ends, and then the suspension identification is positioned at an end point position of the movement operation.

In the embodiments of the present disclosure, each of applications installed on the terminal may bind a plurality of functions contained in a respective application with operation information of the suspension identification, so that it can launch bound functions by performing operation on the suspension identification, and thereby achieving a quick launching for functions of the application. The terminal may store binding lists of a plurality of applications. In particular, for any of the applications, when a binding operation for the suspension identification of the application is detected, at least one of functions to be bound and operation information corresponding to each of the functions to be bound are obtained. A binding list of the application is then created, based on the at least one of functions to be bound and operation information corresponding to each of the functions to be bound.

The operation information is used for indicating an operation type of the operation. Different types of operations on the suspension identification correspond to different operation information. Operations on the suspension identification may include single-click operation, double-click operation, swipe operation, long-press operation and so on. The embodiments of the present disclosure are not limited in this respect. Each of operations may be predefined.

The binding process described above in step 201 may be triggered during an installation process of the terminal, or otherwise may be triggered when a click operation on the suspension identification binding button is detected in a setting list of the application after the installation of the application. The embodiments of the present disclosure will not limit the specific binding time. The detailed binding process in step 201 may include: an option for binding the suspension identification is displayed during the installation of the application; the user may select functions to be bound in the application according to his or her habits, and determine which function is bound with which type of operation, thereby enabling the terminal to bind functions with operation information of corresponding operations, so that the binding list of the application is obtained. Indeed, the binding process may also proceed during use of the application. The embodiments of the present disclosure are not limited in this respect. Alternatively, functions to be bound of the application and corresponding operation information may be built in a development package by a developer, enabling the installation process of the application to accomplish the binding of the suspension identification automatically.

The step 201 described above is a binding process, which can only be implemented before the obtainment of the binding list in step 202. The embodiments of the present disclosure are not limited in this respect. Indeed, the user may also perform modification operation on the binding list during any use process in order to make functions triggered by the suspension identification more suitable for the user's habit.

In step 202, the suspension identification corresponding to the application is displayed when it is detected that the application is running in the foreground. And then the binding list of the application is obtained from stored binding lists of a plurality of applications, wherein, the binding list of the application is used for indicating a binding relationship between operation information and a function of the application.

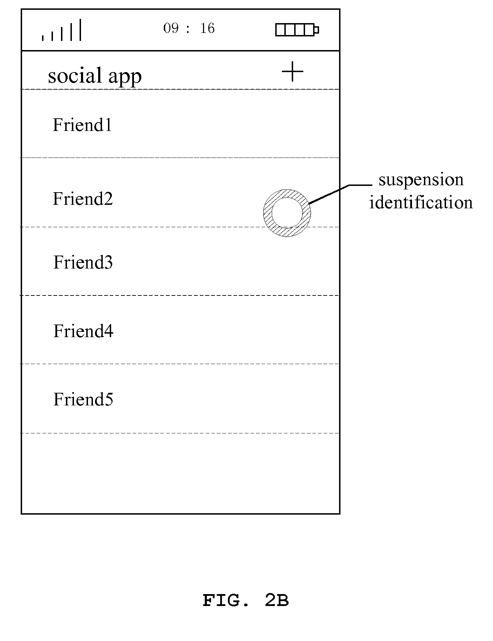

In the embodiments of the present disclosure, the terminal would constantly detect the application currently running in the foreground, or obtain the application which is just switched to the foreground when a switch of applications occurs, and then display the suspension identification corresponding to the application, that is, when the application enters the foreground and runs, the terminal may begin to apply the binding relationship between operation information of the suspension identification and a function of the application. The suspension identification is displayed as suspending on the application interface of the application. A size of display range of the suspension identification may be predefined, and a shape thereof may be circular, elliptical, rectangular, etc. The embodiments of the present disclosure are not limited in this respect. Fig. 2B is a display schematic diagram illustrating a suspension identification, which takes social application as an example. A friends list of the social application is shown in Fig. 2B, wherein a suspension identification is displayed on the display interface.

In particular, when it is detected that the application is running in the foreground, stored binding lists of a plurality of applications may be accessible by a preset interface, and thereby obtaining the binding list of the application. Then, a binding relationship between operation information and a function of the application indicated by the binding list of the application is used, so that whenever the terminal detects an operation on the suspension identification, it can launch a corresponding function of the application.

It is noted that when it is detected that the application enters the background or stops running, the terminal may detect an application switched to the foreground currently, and begin to apply a binding list of the application currently running in the foreground, wherein functions bound with the binding list may or may not be different with those of the application entering the background. The present disclosure is not limited to this respect.

In another embodiment, the terminal may provide an open button for bound functions of a plurality of applications. When it is detected that the user performs open operation on any of the bound functions, the terminal may turn on a bound function of a corresponding application, that is, only for an application which has turned its bound functions on, the terminal can perform the operation for displaying the suspension identification corresponding to the application when it is running in the background is detected. Instead, for an application which hasn't turned its bound functions on, the terminal will not display a corresponding suspension identification.

In step 203, when any operation on the suspension identification is detected, operation information of the operation is obtained.

In the embodiments of the present disclosure, when any operation on the suspension identification is detected, the terminal may generate operation information corresponding to the operation. For example, when a single-click operation on the suspension identification is detected, the terminal will generate operation information corresponding to the single-click operation. The specific content of operation information may be preset by a system. The content of operation information may be, for example, numerals, character string or special characters, etc. The embodiments of the present disclosure are not limited in this respect.

In case that the content of operation information is numerals, operation information may be preset to "1" for single-click operation, "2" for double-click operation, "3" for swipe operation and so on. The terminal may learn a corresponding operation by obtaining generated operation information. For example, if the operation information obtained by the terminal is "1", then the corresponding operation is determined to be single-click operation.

In step 204, a target function is launched according to the operation information of the operation, wherein the target function is a function that matches the operation information.

In the embodiments of the present disclosure, querying whether a function that matches the operation information exists in the binding list of the application is based on the operation information of the operation. If so, then the function that matches the operation information, that is, the target function is obtained and launched.

For example, in terms of social application A, its binding list is as shown in list 1. When a long-press operation on a suspension identification is detected, the terminal may learn the target function is "scan function" from list 1, then launch the scan function and accordingly display a display interface thereof. When a single-click operation on the suspension identification is detected, the terminal may learn the target function is "photograph and send to status information presentation platform", then launch the function for "photograph and send to status information presentation platform", and accordingly display a message editing interface thereof.

**List 1**

| Operation Information | Functions of Social Application A |
|---|---|
| long-press operation | scan |
| single-click operation | photograph and send to status information presentation platform (such as "Moments" or "Blog") |
| ... ... | ... ... |
| double-click operation | add friends |

In another embodiment, it can use another way to display the suspension identification. For example, the suspension identification may contain a swiping region which can swipe within the suspension identification. Swiping operations towards different directions of the swiping region may be bound with corresponding functions of the application, so that when a swiping operation of the swiping region is detected, it may launch a corresponding function based on the swiping direction. For example, when a swipe up operation of the swiping region is detected, it may launch the scan function, and when a swipe down operation of the swiping region is detected, launch the function for "add friends", and so on. The embodiments of the present disclosure will not limit the functions corresponding to operations of the swiping region.

By performing different operations on a suspension identification corresponding to an application, the method provided in the embodiments of the present disclosure may launch a function that matches a corresponding operation, so that the way to launch a function of an application can be more convenient, and thus improving the launching efficiency.

Based on various operations on the suspension identification, the method for launching a function of an application described above may launch a function that matches operation information of the operation. In another embodiment, for purpose of increasing diversity and accuracy for launching a function of an application, the present disclosure may also display a plurality of sub-identifications around the suspension identification by performing a trigger operation on the suspension identification, and bind functions of the application with the plurality of sub-identifications of the suspension identification, so that the functions bound with the sub-identifications may be launched based on operations on the sub-identifications. The process is detailed below.

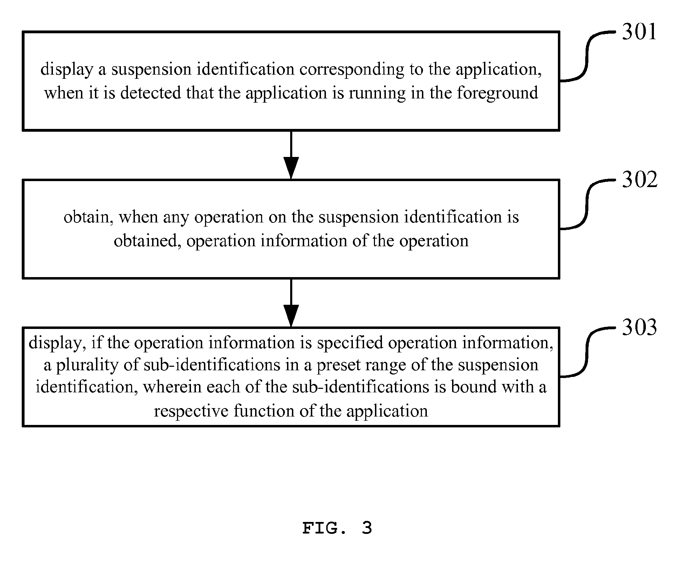

Fig. 3 is a flow diagram illustrating a method for launching a function of an application according to an exemplary embodiment. As shown in Fig. 3, the method may be used with a terminal and include the following steps.

In step 301, a suspension identification corresponding to an application is displayed, when it is detected that the application is running in the foreground.

Wherein, each of sub-identifications is bound with a different function of the application. The terminal may store a list of functions to be bound for each application, and the list of functions to be bound is used for storing a plurality of functions to be bound of the application.

In particular, when it is detected that the application is running in the foreground, the list of functions to be bound of the application is obtained from stored lists of functions to be bound of a plurality of applications. Then, a respective sub-identification corresponding to each of the functions is generated according to a plurality of functions included in the list of functions to be bound of the application.

The binding time and process for functions of the application with the sub-identifications may be similar to the binding time and process in step 201 described above, and will not be repeated herein.

In step 302, when any operation on the suspension identification is detected, operation information of the operation is obtained.

This step is similar to step 203 described above and will not be repeated herein.

In step 303, when the operation information is specified operation information, a plurality of sub-identifications may be displayed in a preset range of the suspension identification, wherein each of the plurality of sub-identifications is bound with a different function of the application.

In the embodiments of the present disclosure, when the operation information is specified operation information, a target function is to display sub-identifications.

The specified operation information is used for indicating a specified operation on the suspension identification. The specified operation may be single-click operation, double-click operation, swipe operation, long-press operation and the like. The embodiments of the present disclosure are not limited in this respect.

In the embodiments of the present disclosure, when specified operation on the suspension identification is detected, the terminal may display a plurality of sub-identifications. Subsequently, when a selection operation on any of the plurality of sub-identifications is detected, the terminal may launch a function bound with the sub-identification corresponding to the selection operation. The function bound with the sub-identification may be, for example, "return to homepage" function, "return to the previous page" function, "photograph and upload" function, "transfer" function, etc. The embodiments of the present disclosure are not limited in this respect.

The plurality of sub-identifications may be evenly distributed on an arc or distributed in another way, wherein the arc may be with the suspension identification as a center and a preset distance as a radius. Further, a size of each of the sub-identifications may or may not be the same. For example, according to launching frequency of a function, a size of a sub-identification corresponding to a function which is frequently launched may be increased, such that it may obviously display the sub-identification in the interface, thus raising the accuracy of click. Certainly, the sub-identifications corresponding to different functions may also be displayed according to launching frequency of functions from high to low in a clockwise direction.

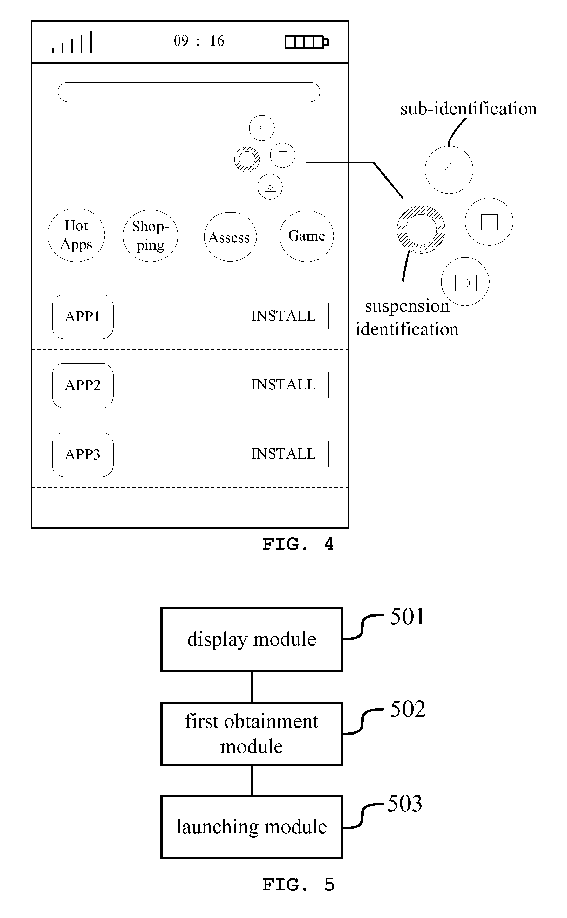

A distance between different sub-identifications may be preset, and a shape of each of the sub-identifications may be circular, elliptical, rectangular, etc. The embodiments of the present disclosure are not limited in this respect. In a display range of each of the sub-identifications may also display a preset icon which is used for indicating a function bound with the corresponding sub-identification. For example, when a function bound with a sub-identification is "return to homepage", the preset icon may be rounded rectangle or the like. Fig. 4 is a display schematic diagram illustrating a suspension identification.

It is noted that if the number of sub-identifications is too large to be displayed entirely on an arc, portions of the sub-identifications may be displayed on arcs of a plurality of concentric circles, wherein a radius of each of the arcs increments from inside and out, displaying as a nested effect.

In order to avoid covering the application interface, when an operation having specified operation information on the suspension identification is detected again, it may stop displaying the plurality of sub-identifications. As the display of the plurality of sub-identifications is stopped, it may set a corresponding animation effect, for example, each of the sub-identifications may move towards the suspension identification at a preset speed, until it overlaps with the suspension identification, then the display is stopped. The embodiments of the present disclosure are not limited in the way to stop displaying the sub-identifications.

Wherein, the operation for stopping the display of sub-identifications may or may not be the same as that for displaying sub-identifications. The embodiments of the present disclosure are not limited in this respect.

In another embodiment, it may display the suspension identification in another way. For example, the suspension identification may be a swiping region, a swiping range of that may be a range of an arc locating the sub-identifications. The swiping region may swipe from a center of a circle to positions locating the sub-identifications. When it is detected that the swiping region overlaps with any position of the sub-identifications, or the swiping region overlaps with region of any of the sub-identifications, it may launch a function bound with the corresponding sub-identification.

The user may set the ways to trigger the suspension identification with respect to the embodiments illustrated in Fig. 2A and Fig. 3 according to his or her habits. For example, the user may get used to launching different functions by performing different types of operations. In this case, the user may set the suspension identification to be launched by a first trigger way in settings. Thereby, when a different type of operations is detected, it may launch a corresponding function. Instead, if being used to launch different functions by two-stage trigger to increase trigger accuracy, the user may set the suspension identification to be launched by a second trigger way in settings. Thus, when a trigger operation on the suspension identification is detected, it may display a plurality of sub-identifications, and launch a function bound with a sub-identification based on the operation thereon.

By performing different operations on a suspension identification corresponding to an application, the method provided in the embodiments of the present disclosure may launch a function that matches a corresponding operation, so that the way to launch a function of an application can be more convenient, and thus improving the launching efficiency. Further, a plurality of sub-identifications which is used for triggering different functions may be displayed by displaying the suspension identification and performing a trigger operation thereon. Then, according to a trigger operation on any of the sub-identifications, a corresponding function may be launched, as each of the sub-identifications corresponds to a function. Thus, the accuracy for launching a function of an application can be greatly improved.

Fig. 5 is a block diagram illustrating a device for launching a function of an application according to an exemplary embodiment. Referring to Fig. 5, the device may include a display module 501, a first obtainment module 502 and a launching module 503.

The display module 501 which is connected to the first obtainment module 502 is used for displaying a suspension identification corresponding to an application when it is detected that the application is running in the foreground; the first obtainment module 502 which is connected to the launching module 503 is used for obtaining, when any operation on the suspension identification is detected, operation information of the operation; the launching module 503 is used for launching a target function according to the operation information of the operation, wherein the target function is a function that matches the operation information.

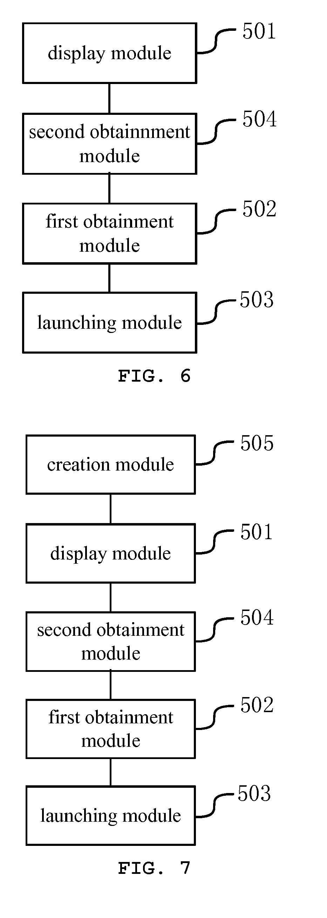

Alternatively, with reference to Fig. 6, the device may further include a second obtainment module 504, which may obtain a binding list of the application from stored binding lists of a plurality of applications, wherein the binding list of the application is used for indicating a binding relationship between operation information and a function of the application.

Alternatively, with reference to Fig. 7, the device may further include a creation module 505, which may create the binding list of the application based on at least one of functions to be bound of the application and operation information corresponding to each of the functions to be bound, when a binding operation for the suspension identification of the application is detected.

Alternatively, the operation may include single-click operation, double-click operation, swipe operation and long-press operation.

Alternatively, the launching module 503 may also be used for displaying a plurality of sub-identifications in a preset range of the suspension identification, if the operation information is specified operation information, wherein each of the sub-identifications is bound with a respective function of the application.

Alternatively, the launching module 503 may also be used for launching, when a selection operation on any of the plurality of sub-identifications is detected, a function bound with the sub-identification corresponding to the selection operation.

Alternatively, the plurality of sub-identifications is displayed on an arc with the suspension identification as a center and a preset distance as a radius.

Alternatively, the launching module 503 may also be used for stopping displaying the plurality of sub-identifications when an operation having the specified operation information on the suspension identification is detected again.

By performing different operations on a suspension identification corresponding to an application, the device provided in the embodiments of the present disclosure may launch a function that matches a respective operation, so that the way to launch a function of the application can be more convenient, and thus improving the launching efficiency.

With respect to the device provided in the embodiments described above, implementations for performing operations by each of modules have been discussed in detail in the embodiments with respect to the method, and will not be repeated herein.

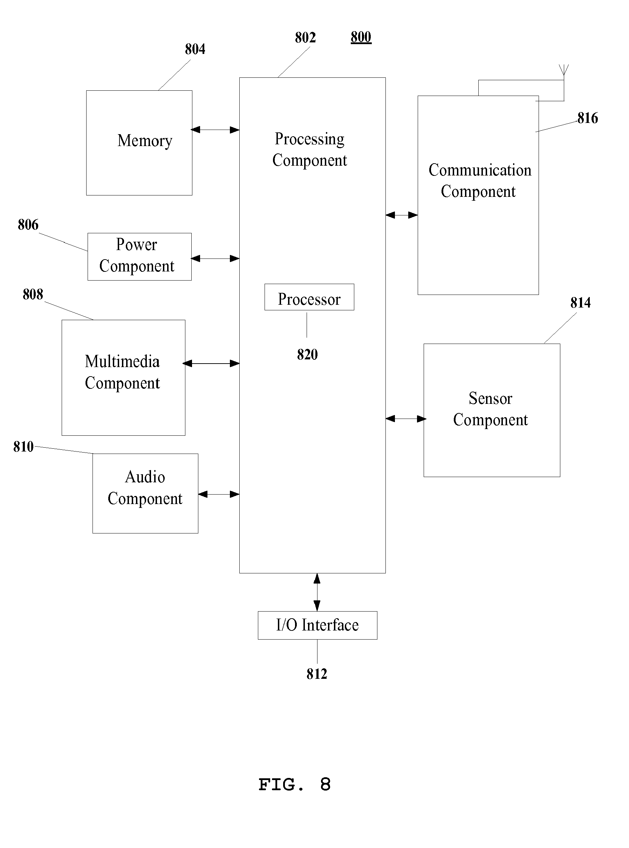

Fig. 8 is a block diagram illustrating a device for launching application functions according to an exemplary embodiment. For example, the device 800 may be a mobile phone, a computer, a digital broadcast terminal, a messaging device, a gaming console, a tablet, a medical device, an exercise equipment, a personal digital assistant, and the like.

The device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, data communications, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contacts data, telephone book data, messages, photos, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 may include a front-facing camera and/or rear camera. When the device 800 is in operation mode, such as in shooting mode or video mode, the front-facing camera and/or rear camera may receive multimedia data from outside. Each of the front-facing camera and the rear camera may be a fixed optical lens system, or focus or optical zoom-enabled.

The audio component 810 is configured to output and/or input audio signals. For example, the audio component 810 includes a microphone ("MIC") configured to receive an external audio signal when the device 800 is in an operation mode, such as a calling mode, a recording mode and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, 4G etc. or a combination thereof. In one example embodiment, the communication component 816 receives a broadcast signal or broadcast associated information from an external broadcast management system via a broadcast channel. In one example embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In example embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In example embodiments, there is also provided a non-transitory computer readable storage medium including instructions, such as the memory 804 including instructions, executable by the processor 820 in the device 800, for performing the above-described methods. For example, the non-transitory computer-readable storage medium may be a ROM, a random access memory (RAM), a CD-ROM, a magnetic tape, a floppy disc, an optical data storage device, and the like.

A non-transitory computer readable storage medium having stored therein instructions that, when executed by a processor of a mobile terminal, causes the mobile terminal to perform the above described method for launching application functions.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and embodiments be considered as illustrative only, with a true scope of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

## Claims

1. A method for launching a function of an application, **characterized in that** the method comprises:
displaying (101) a suspension identification corresponding to the application, when it is detected that the application is running in the foreground;
obtaining (102), when any operation on the suspension identification is detected, operation information of the operation; and
launching (103) a target function according to the operation information of the operation, wherein the target function is a function that matches the operation information.

2. The method of claim 1, wherein before obtaining (102), when any operation on the suspension identification is detected, operation information of the operation, the method further comprises:
obtaining (202) a binding list of the application from stored binding lists of a plurality of applications, wherein the binding list of the application is used for indicating a binding relationship between operation information and a function of the application.

3. The method of claim 1, wherein before the displaying (101) the suspension identification corresponding to the application, the method further comprises:
creating (201) a binding list of the application based on at least one of functions to be bound of the application and operation information corresponding to each of the functions to be bound, when a binding operation for the suspension identification of the application is detected.

4. The method of any of claims 1-3, wherein the operation comprises single-click operation, double-click operation, swipe operation, and long-press operation.

5. The method of claim 1, wherein the launching (103) the target function according to the operation information of the operation comprises:
displaying (303), if the operation information is specified operation information, a plurality of sub-identifications in a preset range of the suspension identification, wherein each of the sub-identifications is bound with a respective function of the application.

6. The method of claim 5, wherein after launching (103) the target function according to the operation information of the operation, the method further comprises:
launching, when a selection operation on any of the plurality of sub-identifications is detected, a function bound with the sub-identification corresponding to the selection operation.

7. The method of claim 5, wherein the plurality of sub-identifications are displayed on an arc with the suspension identification as a center and a preset distance as a radius.

8. The method of claim 5, wherein after the plurality of sub-identifications are displayed, the method further comprises:
stopping displaying the plurality of sub-identifications when an operation having the specified operation information on the suspension identification is detected again.

9. A device for launching a function of an application, **characterized in that** the device comprises:
a display module (501) to display a suspension identification corresponding to the application, when it is detected that the application is running in the foreground;
a first obtainment module (502) to obtain, when any operation on the suspension identification is detected, operation information of the operation; and
a launching module (503) to launch a target function according to the operation information of the operation, wherein the target function is a function that matches the operation information.

10. The device of claim 9, further comprising:
a second obtainment module (504) to obtain a binding list of the application from stored binding lists of a plurality of applications, wherein the binding list of the application is used for indicating a binding relationship between operation information and a function of the application.

11. The device of claim 9, further comprising:
a creation module (505) to create a binding list of the application based on at least one of functions to be bound of the application and operation information corresponding to each of the functions to be bound, when a binding operation for the suspension identification of the application is detected.

12. The device of any of claims 9-11, wherein the operation comprises single-click operation, double-click operation, swipe operation, and long-press operation.

13. The device of claim 9, wherein the launching module (503) is further used to,
display, if the operation information is specified operation information, a plurality of sub-identifications in a preset range of the suspension identification, and wherein each of the sub-identifications is bound with a respective function of the application;
launch, when a selection operation on any of the plurality of sub-identifications is detected, a function bound with the sub-identification corresponding to the selection operation; and
stop displaying the plurality of sub-identifications when an operation having the specified operation information on the suspension identification is detected again.

14. The device of claim 13, wherein the plurality of sub-identifications are displayed on an arc with the suspension identification as a center and a preset distance as a radius.

15. A device for launching a function of an application, comprising:
a processor (820);
a memory (804) for storing processor-executable instructions;
wherein the processor (820) is configured to:
display (101) a suspension identification corresponding to the application, when it is detected that the application is running in the foreground;
obtain (102), when any operation on the suspension identification is detected, operation information of the operation; and
launch (103) a target function according to the operation information of the operation, wherein the target function is a function that matches the operation information.
